# EUROPEAN PATENT SPECIFICATION

(11) **EP 3 885 211 B1**
(45) Date of publication and mention of the grant of the patent: **07.06.2023**
(21) Application number: 19912145.0
(22) Date of filing: 28.06.2019
(51) Int. Cl.: B60S 3/04, B60W 30/06, G05D 1/02, B62D 15/02, G08G 1/00, H04W 4/44

(54) **AUTOMATIC PARKING-BASED CAR WASHING METHOD AND CAR-MOUNTED TERMINAL**
AUTOMATISCHES PARKPLATZBASIERTES FAHRZEUGWASCHVERFAHREN UND FAHRZEUGMONTIERTES ENDGERÄT
PROCÉDÉ DE LAVAGE AUTOMATIQUE DE VOITURE À PARTIR D'UNE PLACE DE STATIONNEMENT ET TERMINAL MONTÉ SUR UNE VOITURE

(30) Priority: 21.01.2019 CN 201910053220
(43) Date of publication of application: 29.09.2021
(73) Proprietor: Guangzhou Xiaopeng Motors Technology Co., Ltd., Guangzhou 510000 (CN)
(72) Inventor: LIU, Yanfei, Guangzhou, Guangdong 510000 (CN); WU, Xian, Guangzhou, Guangdong 510000 (CN); HE, Weimin, Guangzhou, Guangdong 510000 (CN); LIU, Yu, Guangzhou, Guangdong 510000 (CN)
(74) Representative: Yip, Matthew Wing Yu
(86) International application number: PCT/CN2019/093461
(87) International publication number: WO 2020/151188

(56) References cited:
- CN-A- 103 587 504
- CN-A- 103 592 942
- CN-A- 106 541 931
- CN-A- 106 915 333
- CN-A- 107 170 284
- CN-A- 107 813 796
- CN-A- 109 649 383
- DE-A1-102013 215 195
- US-A1- 2012 253 973
- US-A1- 2014 048 104
- US-A1- 2014 052 312

## Description

### Field of Invention

The present invention relates to the field of automotive cleaning and, in particular, to a method of car washing based on automatic parking and a vehicle terminal.

### Background

As the number of private automobiles increases, the car washing industry has transitioned from conventional manual car washing to car washing by car washer. This does not only represent a change of consumer habits, but also a new era of automation of the car washing industry. However, most existing car washing solutions require drivers to drive vehicles into designated car washing areas before starting automatic car washing. This approach is cumbersome for most drivers. Especially for novice drivers, it may be difficult and time consuming to accurately park their vehicles into designated areas. This results in low car washing efficiency and poor user experience. US 2014/048104 A1 proposes a method for autonomously driving a motor vehicle in a car wash as well as a corresponding car wash. US 2014/052312 A1 discusses a method for autonomously driving a motor vehicle in a car wash. US 2012/253973 A1 discusses a carwash method that involves a customer using a smartphone with an app for finding participating carwash locations, making online payments for select carwash options, and then using the smartphone app to start the washing process when the customer arrives at the carwash.

### Summary of Invention

The present invention is directed to a method of car washing based on automatic parking, as recited by claim 1, and an associated vehicle terminal, as recited by claim 7, which can control a vehicle to automatically park into a car washing area of a car washer, thereby improving car washing efficiency. Preferred features are set out in the dependent claims.

In accordance with a first aspect of the invention, there is provided a method of car washing based on automatic parking, the method comprising:
controlling a vehicle to drive to a predetermined initial parking position in the vicinity of a car washer in response to detection of a park-in command;
generating a parking route based on the predetermined initial parking position and a location of a car washing area predetermined by the car washer;
controlling the vehicle to travel along the parking route to the car washing area; and
sending a car washing request message to the car washer to cause the car washer to start a car washing service according to the car washing request message when the vehicle is parked into the car washing area.

According to the first aspect of the present invention, in a preferred embodiment, the method further comprises:
controlling the vehicle to drive away from the car washing area in response to the detection of a park-out command.

According to the first aspect of the present invention, in a preferred embodiment, said controlling a vehicle to drive to a predetermined initial parking position in the vicinity of a car washer in response to detection of a park-in command comprises:
if location of the car washer is set as a navigation destination, after detecting that a real-time distance between the vehicle and the car washer is less than a preset threshold distance, confirming detection of a park-in command and controlling the vehicle to drive to the predetermined initial parking position in the vicinity of the car washer; or
in response to detection of a park-in command input by a user, controlling the vehicle to drive to the predetermined initial parking position in the vicinity of the car washer.

According to the first aspect of the present invention, in a preferred embodiment, the method further comprises:
detecting a preset marker inside the car washer using a camera and a radar sensor of the vehicle; and
determining the location of the car washing area based on a location of the marker.

According to the first aspect of the present invention, in a preferred embodiment, the method further comprises:
determining whether a fee deduction success message has been received; and
if so, performing the step of controlling the vehicle to follow the parking route and park in the car washing area,
wherein the fee deduction success message indicates that a server has successfully deducted a fee from a deposit account, the deposit account being an account associated with a user account corresponding to the vehicle.

According to the first aspect of the present invention, in a preferred embodiment, the method further comprises:
checking whether hardware devices of the vehicle are in normal operating states required for automatic parking;
if so and if the fee deduction success message has been received, performing the step of controlling the vehicle to follow the parking route and park in the car washing area; and
if any one of the hardware devices is not in its normal operating state, outputting a parking reminder message to remind the user to park the vehicle into the car washing area.

According to the first aspect of the present invention, in a preferred embodiment, the method further comprises, after detecting the park-out command and before controlling the vehicle to drive away from the car washing area:
determining whether the car washing service of the car washer has been completed, and if so, performing the step of controlling the vehicle to drive away from the car washing area in response to detection of a park-out command.

In accordance with a second aspect of the present invention, there is provided a vehicle terminal, the vehicle terminal comprising:
a control unit configured to control a vehicle to drive to a predetermined initial parking position in the vicinity of a car washer in response to detection of a park-in command;
a path generation unit configured to generate a parking route based on the predetermined initial parking position and a location of a car washing area predetermined by the car washer;
a parking unit configured to control the vehicle to follow the parking route and park in the car washing area; and
a requesting unit configured to send a car washing request message to the car washer to cause the car washer to start a car washing service in accordance with the car washing request message when the vehicle is parked within the car washing area.

According to the second aspect of the present invention, in a preferred embodiment, the vehicle terminal further comprises:
a departure unit configured to control the vehicle to drive away from the car washing area in response to detection of a park-out command.

According to the second aspect of the present invention, in a preferred embodiment, the control unit is configured to:
when a navigation destination of the vehicle is set as a location of the car washer, and after detecting that a real-time distance between the vehicle and the car washer is less than a preset threshold distance, confirm detection of a park-in command and control the vehicle to drive to the predetermined initial parking position in the vicinity of the car washer; or
in response to detection of a park-in command input by a user, control the vehicle to drive to the predetermined initial parking position in the vicinity of the car washer.

According to the second aspect of the present invention, in a preferred embodiment, the vehicle terminal further comprises:
a first detection unit configured to detect a preset marker inside the car washer using a camera and a radar sensor of the vehicle; and
a determination unit configured to determine a location of the car washing area based on a location of the marker.

According to the second aspect of the present invention, in a preferred embodiment, the vehicle terminal further comprises:
a judgement unit configured to determine whether a fee deduction success message is received,
wherein the parking unit is configured to control the vehicle to follow the parking route and park in the car washing area when the judgement unit determines that a fee deduction success message has been received, and
wherein the fee deduction success message indicates that a server has successfully deducted a fee from a deposit account, the deposit account being an account associated with a user account corresponding to the vehicle.

According to the second aspect of the present invention, in a preferred embodiment, the vehicle terminal further comprises:
a second detection unit configured to check whether hardware devices of the vehicle are in normal operating states required for automatic parking;
the parking unit is configured to control the vehicle to follow the parking route and park in the car washing area when the second detection unit detects that the hardware devices of the vehicle are in the normal operating states and the judgement unit determines that the fee deduction success message has been received; and
a reminder unit configured to, when the second detection unit detects that any one of the hardware devices is not in its normal operating state, output a parking reminder message to remind the user to park the vehicle into the car washing area.

According to the second aspect of the present invention, in a preferred embodiment, the departure unit is configured to:
after a park-out command is detected, determine whether the car washing service of the car washer has been completed; and
when it is determined that the car washing service has been completed, control the vehicle to drive away from the car washing area.

In accordance with a further possible realization, there is provided a vehicle terminal, which comprises:
a memory device storing executable program code; and
a processor coupled to the memory device, wherein
the processor is operable to execute the program code stored in the memory device to perform any one of the methods in accordance with the first aspect of the invention.

In accordance with a further possible realization, there is provided a computer-readable storage medium, which stores computer program code, execution of which causes a computer to perform any one of the methods in accordance with the first aspect of the invention.

In accordance with a further possible realization, there is provided a computer program product which, when run on a computer, causes the computer to perform any one of the methods in accordance with the first aspect of the invention.

Compared to the conventional art, the present invention can achieve the beneficial effects listed below.

When a park-in command is detected, a vehicle is controlled to drive to a predetermined initial parking position in the vicinity of a car washer, and a parking route is generated based on the predetermined initial parking position and the location of the car washer, so that the vehicle can be controlled to follow the parking route and park in the car washing area. Once it is detected that the vehicle is parked in the car washing area, car washing service can be requested via a car washing request message. By implementation of the present invention, it is possible to control a vehicle to automatically park into a designated car washing area of a car washer without manual operation by a driver. Additionally, car washing service can be automatically started after the vehicle is parked into the car washing area. Time needed for a driver to park the vehicle can be saved, and car wash efficiency can be improved.

### Brief Description of Drawings

In order to clearly illustrate the technical solutions in the embodiments of the present invention, brief description of the drawings pertinent to the embodiments will be provided. It should be apparent to those of ordinary skills in the art that the drawings described below are for the purpose of illustrating embodiments of the invention only. The skilled person will be able to devise further drawings based on the provided drawings without exercising any inventive efforts.
FIG. 1 is a schematic structural diagram of a car washing system according to an embodiment of the present invention;
FIG. 2 is a flowchart of a method of car washing based on automatic parking according to an embodiment of the present invention;
FIG. 3 is a top view of a car washer and an initial parking position in accordance with an embodiment of the present invention;
FIG. 4 is a flowchart of another method of car washing based on automatic parking according to an embodiment of the present invention;
FIG. 5 is a flowchart of yet another method of car washing based on automatic parking according to an embodiment of the present invention;
FIG. 6 is a schematic structural diagram of a vehicle terminal according to an embodiment of the present invention;
FIG. 7 is a schematic structural diagram of another vehicle terminal according to an embodiment of the present invention;
FIG. 8 is a schematic structural diagram of yet another vehicle terminal according to an embodiment of the present invention;
FIG. 9 is a flowchart of yet another method of car washing based on automatic parking according to an embodiment of the present invention.

### Detailed Description

The technical solutions in the embodiments of the invention will now be described clearly and completely with reference to the accompanying drawings. The described embodiments merely show some but not all possible ways for implementing the invention. All other embodiments that persons of ordinary skills in the art could derive without inventive efforts fall within the scope of the present invention.

It is to be noted that terms "comprising," "including" and any equivalent variations thereof, used in this disclosure are intended to cover the listed matters non-exclusively. For example, a process, method, system, product, or device that comprises a series of steps or units is not meant to include the listed steps or units only, but may optionally include other steps or units not listed or any steps or units inherent to such a process, method, system, product, or device.

Embodiments of the present invention disclose a method of car washing based on automatic parking and an associated vehicle terminal, which can control a vehicle to automatically park into a car washing area of a car washer and thereby improve efficiency of car washing. Details are described below.

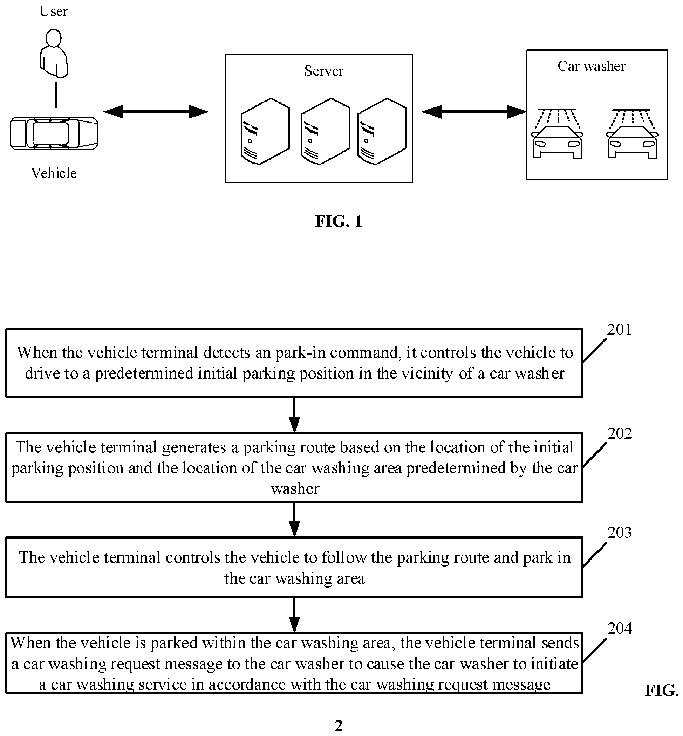

In order to facilitate understanding the method of car washing based on automatic parking and the associated vehicle terminal of the present invention, the system architecture to which the embodiments of the present invention are applicable is first described below. FIG. 1 is a schematic structural diagram of a car washing system. The car washing system may include a car washer, a server, and a vehicle equipped with a vehicle terminal. The car washer, the server, and the vehicle terminal may transmit and receive data over wireless communication connections such as 5G networks, 4G networks, Wireless Local Area Networks (WLAN), Wide-Area Networks (WAN) or Bluetooth connections.

### Embodiment 1

Reference is made to FIG. 2, which is a flowchart illustrating a method of car washing based on automatic parking according to an embodiment of the present invention. The method of car washing based on automatic parking shown in FIG. 2 is suitable for the system shown in FIG. 1. The method may include the following steps:
201. When the vehicle terminal detects a park-in command, it controls the vehicle to drive to a predetermined initial parking position in the vicinity of a car washer.

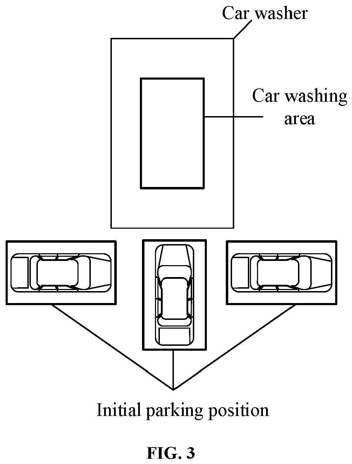

In an embodiment of the present invention, a user may enter a park-in command by way of voice input, operation of a touch screen or the like. The vehicle terminal may, upon receipt of the park-in command, search for a nearby car washer and to determine a predetermined initial parking position in the vicinity of the car washer. Reference is made to FIG. 3, which is a top view of a car washer and an initial parking position in accordance with an embodiment of the present invention. As shown in FIG. 3, the initial parking position may be provided around an entrance of the car washer or any position within a distance range from the entrance of the car washer. Preferably, when the vehicle is parked into the initial parking position, it is aligned parallel or perpendicular to the entrance of the car washer in order to drive into the car washer . When the vehicle is parked in the initial parking position, its orientation is not limited to any particular direction, but ideally, the vehicle head points towards the entrance of the car washer.

202. The vehicle terminal generates a parking route based on the location of the initial parking position and the location of the car washing area predetermined by the car washer.

In an embodiment of the present invention, location information of a plurality of car washers, location information of car washing areas of each car washer, and location information of initial parking positions in the vicinity of each car washer may be stored on a server. A vehicle terminal may query the server for location information of a car washing area in a car washer that is currently ready for entry and location information of the initial parking position at which the vehicle is currently or about to be parked and use the initial parking position as a starting point and the location of the car washing area as an end point to generate a parking route. Optionally, for each car washer, the server may store multiple parking routes from each initial parking position near the car washer to the car washing area in the car washer. The vehicle terminal may select a parking route that has a starting point matching the initial parking position where the vehicle is currently (or about to be) parked.

203. The vehicle terminal controls the vehicle to travel along the parking route to the car washing area.

204. When the vehicle is parked within the car washing area, the vehicle terminal sends a car washing request message to the car washer to cause the car washer to start a car washing service in accordance with the car washing request message.

In an embodiment of the present invention, when it is detected that a designated part of the vehicle (e.g., the center point of the rear axle of the vehicle) coincides with a predetermined position in the car washing area, a conclusion can be drawn that the vehicle is parked within the car washing area, and the vehicle terminal may control the vehicle to stop and send a vehicle parking success message to the server. Further, the car washer may also detect, by infrared detection device thereof, whether the vehicle is parked in the car washing area, and may send a vehicle parking success message to the server upon detecting that the vehicle is parked within the car washing area. After the vehicle is parked in the car washing area, the user may input a car washing start command through the vehicle terminal. The vehicle terminal then sends a car washing request message to the server. The server can send the car washing request message to the car washer upon receipt of a vehicle parking success message sent by the vehicle terminal and/or the car washer. After receiving the car washing request message, the car washer starts car washing service for the vehicle.

In the method depicted in FIG. 2, the vehicle terminal may control the vehicle to automatically park into the car washing area in the car washer without manual manipulation by a driver. This reduces the parking time for a driver and improves car wash efficiency. Moreover, once it is detected that a vehicle is parked into the car washing area, car washing service may automatically start, which may further improve car wash efficiency.

### Embodiment 2

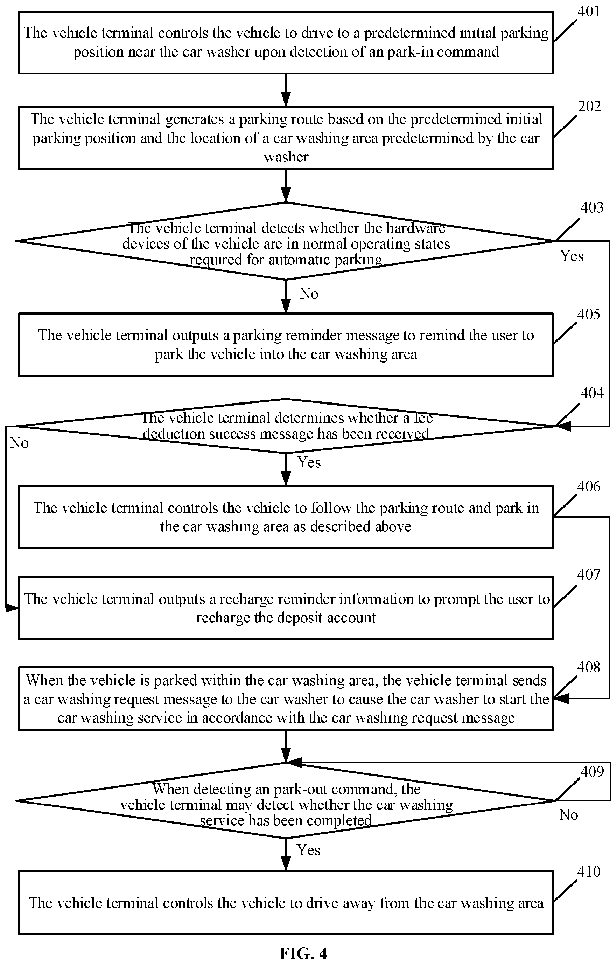

Reference is made to FIG. 4, which illustrates another method of car washing based on automatic parking according to an embodiment of the present invention. As shown in FIG. 4, the method of car washing based on automatic parking may include the following steps:
401. The vehicle terminal controls the vehicle to drive to a predetermined initial parking position near the car washer upon detection of a park-in command.

In an embodiment of the present invention, a park-in command may be triggered in two different manners.
1. If a navigation destination of the vehicle is set as the location of the car washer, after detecting that the real-time distance between the vehicle and the car washer is less than a preset threshold distance, detection of a park-in command is confirmed and the vehicle is controlled to drive to the predetermined initial parking position in the vicinity of the car washer. In other words, in this implementation, the park-in command is automatically triggered when the vehicle reaches its navigation destination.
2. An auto-park command entered by a user is detected. In this implementation, the park-in command needs to be manually input. When the manually input park-in command is detected, the vehicle terminal controls the vehicle to drive to the predetermined initial parking position in the vicinity of the car washer.

Further, the vehicle terminal may detect park-in commands input by the user by the following means: 1) input by operating a touch screen of the vehicle terminal (e.g., by clicking a "park" key); 2) input using an electronic key for the vehicle; and 3) input through a mobile communication device (e.g., a cell phone) in communication with the vehicle terminal.

402. The vehicle terminal generates a parking route based on the predetermined initial parking position and the location of a car washing area predetermined by the car washer

In an embodiment of the present invention, the vehicle terminal may detect a preset marker (e.g., a special lane marker) inside the car washer using a camera and a radar sensor of the vehicle and determine the location of the car washing area based on the position of the marker. That is, the vehicle terminal may adjust its detection of the position of the car washing area in real time based on detection results of the camera and the radar sensor while the vehicle is driven into the car washer. In this process, the specific parking route may be further adjusted, which allows the vehicle to be parked into the car washing area more precisely.

403. The vehicle terminal detects whether the hardware devices of the vehicle are in normal operating states required for automatic parking, and if yes, proceeds to step 404, and if no, proceeds to step 405.

In an embodiment of the present invention, the normal operating states of the various hardware devices may include, inter alia, the following: 1) normal tire pressure; 2) all four doors and two covers (four side doors, front bonnet, and rear trunk cover) in a normal closed state; 3) no fault with cameras and radar sensors; 4) no fault with an intelligent controller for controlling vehicle movement; 5) no fault with the power system; 6) no fault with a controller and sensors for autonomous driving.

404. The vehicle terminal determines whether a fee deduction success message has been received, and if yes, proceeds to step 406, and if no, proceeds to step 407.

In an embodiment of the present invention, the fee deduction success message is used to indicate that the server has successfully deducted a fee from a deposit account, the deposit account being an account associated with a user account corresponding to the vehicle. Therein, a user account corresponding to a vehicle may be obtained by identity recognition of the vehicle. In particular, this can be done via communication between the car washer and the vehicle terminal. The communication may involve, inter alia, Bluetooth communication, 4G communication, Wi-Fi communication, and V2X (Vehicle to everything) communication, etc. In an embodiment of the present invention, the V2X communication may be based on Internet of Things connecting the vehicle and the car washer. The car washer may obtain the VIN (Vehicle Identification Number) of the vehicle through the communication methods listed above and use the VIN as a user account, or obtain license plate information of the vehicle and identify a user account corresponding to the license plate information.

The server may determine that fee deduction from the deposit account may be successful under the following circumstances: when the current balance of the deposit account exceeds the fee required for the car washing service; or the amount of overdraft has not exceeded an allowed credit limit after the fee required for the car washing service is deducted.

405. The vehicle terminal outputs a parking reminder message to remind the user to park the vehicle into the car washing area.

In an embodiment of the present invention, if it is detected that any hardware device is not in a normal operating state required for automatic parking, then it is determined that the current vehicle conditions are not suitable for automatic parking. Thus, the vehicle terminal may output a parking reminder message (e.g., in the form of an audio or text message, etc.) to remind the user to manually drive the car to enter the car washing area in the car washer.

406. The vehicle terminal controls the vehicle to follow the parking route and park in the car washing area as described above, and the process proceeds to step 408.

407. The vehicle terminal outputs a recharge reminder message to prompt the user to recharge the deposit account.

In an embodiment of the present invention, the vehicle terminal may output the recharge reminder message in the form of an audio or text message, or the like. Optionally, the vehicle terminal may also determine whether a recharge completion message is received from the server, and if so, re-execute step 404 to reinitiate a parking request. The recharge completion message is used to indicate that the deposit account has been recharged.

408. When the vehicle is parked within the car washing area, the vehicle terminal sends a car washing request message to the car washer to cause the car washer to start the car washing service in accordance with the car washing request message.

In an embodiment of the present invention, the vehicle terminal may also perform the following operations after the vehicle is parked into the car washing area.

The vehicle terminal controls the vehicle's hardware devices that are controllable electronically to enter car washing preparation states, which may particularly include, inter alia, the following operations: 1) closing the windows; 2) switching off the wipers; 3) folding up the rear-view mirrors; 4) switching the gear to "P".

When the hardware devices described above are in the car washing preparation states, the vehicle terminal may acquire car washing service packages sent by the server and display those on a touch screen of the vehicle terminal; alternatively, the vehicle terminal may send the car washing service packages to a mobile communication device (e.g., a cell phone) in communication with the vehicle terminal for display thereon.

The vehicle terminal acquires a target service package selected from the car washing service packages by the user and detects a car washing start command entered by the user. The user may also enter a car washing start command by operating the touch screen of the vehicle terminal, via the mobile communication device, or by way of locking the vehicle with the electronic key.

After detecting the car washing start command, the vehicle terminal performs the step of sending a car washing request message to the car washer to cause the car washer to start the car washing service according to the car washing request message. In particular, the car washing service started by the car washer is a car washing service corresponding to the target service package.

In the course of car wash, if the vehicle terminal detects one or more of the following conditions, it can send a car washing stop message to the car washer to cause the car washer to stop the current car washing service: 1) any one of the windows, wipers, rear-view mirrors, the four doors and two covers is open; 2) the gear is not in "P"; 3) engine start; 4) hazardous vehicle conditions which may cause the vehicle to scratch obstacles surrounding it.

Further, the vehicle terminal may also output a state alert message when it detects presence of the above-mentioned condition or conditions to draw the user's attention to the abnormal status of the vehicle. The vehicle terminal may output the status alert message in the following manners: by controlling the vehicle lights to flash (e.g., flashing the hazard lights), by controlling the vehicle horn to sound (e.g., an intermittent beep), by outputting a status alert message in the form of text or audio, by pushing a status alert message to a mobile communication device such as a cell phone, etc. The present invention is not limited to any particular way of outputting the status alert message.

In addition, during the car wash, the vehicle terminal may also obtain car washing progress information from the server and output the car washing progress information for display. The car washing progress information may include information of the current phase of car wash (e.g., water spray, foam application, etc.), the remaining time of car wash, and the like. The remaining time of car wash may be calculated by the server in real time based on the target service package and the vehicle model.

409. When detecting a park-out command, the vehicle terminal may detect whether the car washing service has been completed, and if yes, execute step 410, and if not, repeats step 409.

In an embodiment of the present invention, the vehicle terminal may detect a park-out command entered in the following manners: 1) a park-out command entered by operating a touch screen of the vehicle terminal (e.g., clicking a "depart" key); 2) a park-out command entered via an electronic key of the vehicle; and 3) a park-out command entered by a mobile communication device in communication with the vehicle terminal, such as a cell phone.

As discussed, in embodiments of the present invention, a user may enter a park-in command and a park-out command via a touch screen of a vehicle terminal, an electronic key, or a mobile communication device such as a cell phone, a tablet computer, or the like. If a user enters the park-in command and the park-out command using an electronic key or a mobile communication device, the user does not need to enter the car washer so as to avoid contacting the moisture and smudges in the car washer. For example, after a vehicle is driven to an area near a car washer, a user may get off the vehicle and enter a park-in command using an electronic key or a mobile communication device, and let the vehicle terminal to automatically control the vehicle to park into the car washing area in the car washer. When the car wash is done, the user may enter a park-out command using the electronic key or the mobile communication device, and let the vehicle terminal to automatically control the vehicle to exit the car washing area. When the vehicle is clear of the car washing area, the user can get in, and the entire car washing process is completed.

Further, in the embodiment of the present invention, the vehicle terminal controls the vehicle to drive away from the car washing area only after detection of the park-out command and after completion of the car washing service. That is, while in the process of car wash, even if a park-out command is detected, the vehicle terminal will not be able to control the vehicle to exit. This reduces safety hazards that may be brought about by starting the vehicle during car wash, thereby safeguarding safety.

Further, at the end of the car wash, the server may send a service completion message to the vehicle terminal to inform the user that the car washing service has been completed and that a park-out command may be entered, to guide the user to control the vehicle to drive away from the car washing area in time using the vehicle terminal.

410. The vehicle terminal controls the vehicle to drive away from the car washing area.

In the method depicted in FIG. 4, the vehicle terminal may control the vehicle to automatically park into and automatically depart from the car washing area. This allows a user to complete the entire car washing process conveniently and improves car washing efficiency. Further, the hardware devices of the vehicle may also be checked and fee for the car washing service may be deducted before the vehicle terminal controls the vehicle to park into the car washing area. This improves safety of the automatic parking. The vehicle terminal is not allowed to control the vehicle to exit the car washing area during car wash. This further improves safety of the car wash. Additionally, in the method depicted in FIG. 4, when a user enters park-in and park-out commands using an electronic key or a mobile communication device, the user does not need to enter the car washer throughout the car washing process. This allows the user to avoid contacting moisture and smudges in the car washer and improves the user experience.

### Embodiment 3

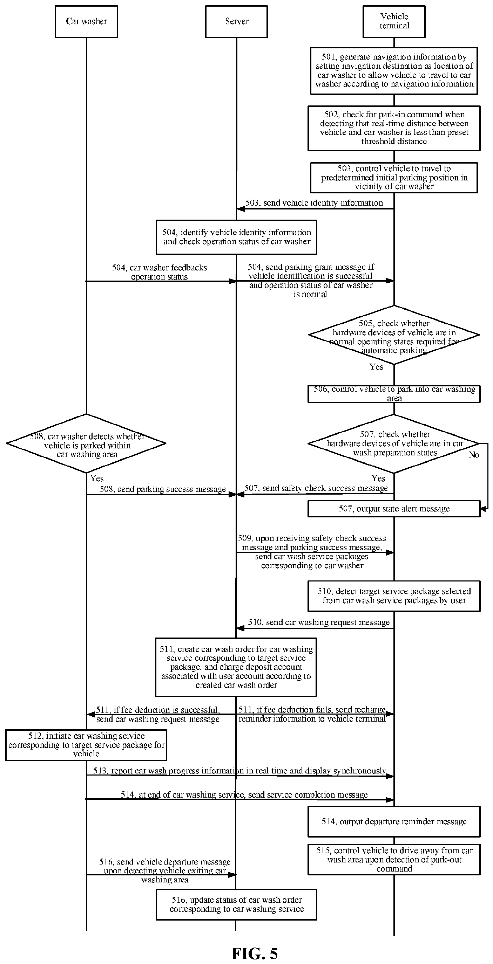

Reference is made to FIG. 5, which illustrates another method of car washing based on automatic parking according to an embodiment of the present invention. In the method of car washing based on automatic parking shown in FIG. 5, the server may include a car washing server in the backend of the car washer and an intelligent car washing cloud server of an intelligent car washing platform, and the like. As shown in FIG. 5, the method of car washing based on automatic parking may include the following steps.

501. The vehicle terminal generates navigation information by setting the navigation destination as the location of a car washer to allow the vehicle to travel to the car washer according to the navigation information.

In an embodiment of the present invention, the vehicle terminal may query a server (e.g., an intelligent car washing cloud server) for car washers in the vicinity of the vehicle and output information of multiple car washers for the user to select. The vehicle terminal may detect a target car washer selected from the car washers by the user and set its location as a navigation destination, and then control the vehicle to automatically drive or assist the user to drive the vehicle to the vicinity of the car washer.

502. When the vehicle terminal detects that the real-time distance between the vehicle and the car washer is less than a preset threshold distance, it checks for a park-in command.

In an embodiment of the present invention, when the vehicle terminal detects that the vehicle approaches the navigation destination, it initiates a car washer search function and looks for car washers near the vehicle (i.e., car washers closer to the vehicle than the threshold distance) by way of image recognition, wireless communication with car washers, etc.

In particular, the vehicle terminal may automatically trigger a park-in command or detect a park-in command entered by a user when it is detected that the real-time distance between the vehicle and the car washer is less than a preset threshold distance.

503. The vehicle terminal controls the vehicle to travel to a predetermined initial parking position in the vicinity of the car washer and sends its vehicle identity information to the server.

504. The server identifies the vehicle identity information and checks the operation status of the car washer; if the vehicle identification is successful and the operation status of the car washer is normal, the server sends a parking grant message to the vehicle terminal.

In an embodiment of the invention, vehicle identification success may encompass the server identifying a user account corresponding to the vehicle identity and a deposit account associated with the user account. Normal operation status of the car washer may include no fault with component parts of the car washer and smooth communication between the car washer and the server, and the like.

505. The vehicle terminal checks whether the hardware devices of the vehicle are in normal operating states required for automatic parking, and if so, executes step 506.

506. The vehicle terminal controls the vehicle to park into the car washing area upon receiving the parking grant message and detecting that the hardware devices are in the normal operating states.

In an embodiment of the present invention, the vehicle terminal may generate a parking route based on the location of the initial parking position and the location of the car washing area preset by the car washer and control the vehicle to follow the parking route and park into the car washing area. In the process of controlling the vehicle to park into the car washing area, the vehicle terminal may detect a preset marker (e.g., a special lane marker) inside the car washer using cameras and radar sensors of the vehicle and adjust its detection of the location of the car washing area according to the position of the marker and the specific parking route, thereby controlling the vehicle to park into the car washing area more precisely.

507. The vehicle terminal checks whether the hardware devices of the vehicle are in the car washing preparation states when the vehicle is parked within the car washing area, and if so, sends a safety check success message to the server, and if not, outputs a status alert message.

508. The car washer detects whether the vehicle is parked within the car washing area, and if so, sends a parking success message to the server, and if not, sends a vehicle parking failure message to the vehicle terminal via the server.

In the embodiment of the present invention, if the vehicle terminal receives the vehicle parking failure message, it controls the vehicle to move based on the vehicle parking failure message and to park into the car washing area. Specifically, if the car washer detects that the vehicle has not arrived at the car washing area, then the vehicle parking failure message it sends may contain control information directing the vehicle to move forward to allow the vehicle terminal to control the vehicle to proceed according to the control information; if the car washer detects that the vehicle has passed the car washing area, the control information may be for directing the vehicle to reverse to allow the vehicle terminal to control the vehicle to move backwards according to the control information.

509. The server, upon receiving the safety check success message and the parking success message, sends car washing service packages corresponding to the car washer to the vehicle terminal.

510. The vehicle terminal detects a target service package selected from the car washing service packages by the user and sends a car washing request message to the server.

In the embodiment of the present invention, the car washing request message may include information relating to the target service package. The car washing service started by the car washer corresponds to services included in the target service package.

511. The server creates a car washing order for the car washing service corresponding to the target service package and charges the deposit account associated with the user account according to the created car washing order; if the fee deduction is successful, the server sends a car washing request message to the car washer; and if the fee deduction fails, the server sends a recharge reminder message to the vehicle terminal.

512. The car washer, upon receiving the car washing request message, starts a car washing service corresponding to the target service package for the vehicle.

513. The car washer reports car washing progress information of the car washing service to the server in real time during the car washing process; and the server acquires the car washing progress information from the car washer and synchronizes the car wash progress information to the vehicle terminal for display.

514. At the end of the car washing service, the car washer sends a service completion message to the server, which forwards the service completion message to the vehicle terminal; and the vehicle terminal, upon receiving the service completion message, outputs a departure reminder message to direct the user to drive the vehicle away.

515. The vehicle terminal controls the vehicle to drive away from the car washing area upon detection of a park-out command.

516. The car washer sends a vehicle departure message to the server upon detecting the vehicle exiting the car washing area; and the server updates the order status of the car washing order corresponding to the car washing service upon receipt of the vehicle departure message.

In the method depicted in FIG. 5, through communication and interaction between the car washer, the server, and the vehicle terminal, car washer searching, automatic parking into the car washer, vehicle hardware device state detection, vehicle parking in place detection, password-free payment for car wash, automatic start of car washing service, car washing progress synchronization, automatic vehicle departure, etc. can be achieved. The user only needs to select a suitable car washing service package in order to complete the whole car washing process. Efficient, convenient, and secure car washing service can be provided for the user.

### Embodiment 4

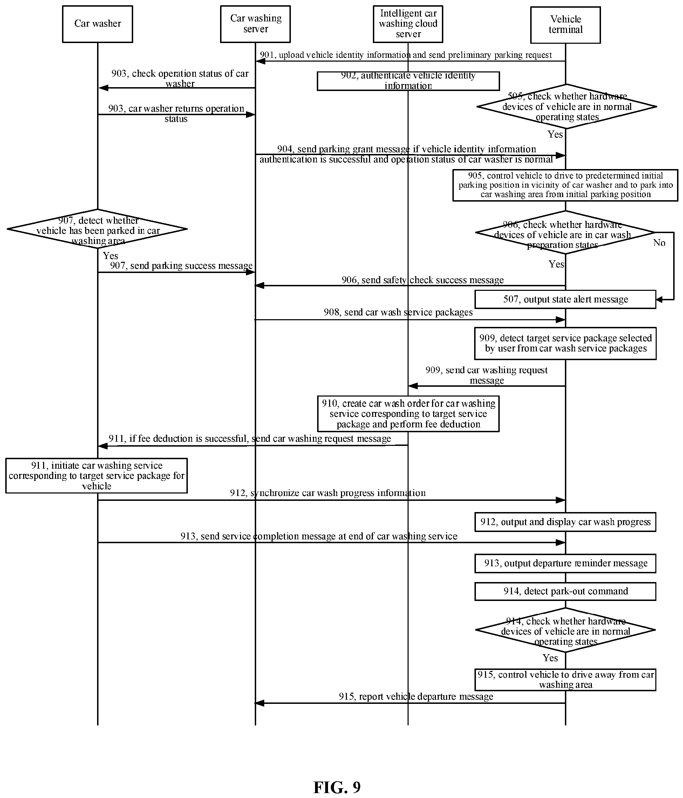

Reference is made to FIG. 9, which shows yet another method of car washing based on automatic parking according to an embodiment of the present invention. As shown in FIG. 9, the method of car washing based on automatic parking may include the following steps.

901. The vehicle terminal uploads vehicle identity information to the intelligent car washing cloud server and sends a preliminary parking request when approaching the car washer.

902. The intelligent car washing cloud server authenticates the vehicle identity information and sends the preliminary parking request to the car washing server.

903. The car washing server performs an operation status check on the car washer in response to the preliminary parking request and receives the operation status feedback from the car washer.

904. If the vehicle identity information authentication by the intelligent car washing cloud server is successful and the car washing server detects that the operation status of the car washer is normal, a parking grant message is sent to the vehicle terminal.

905. The vehicle terminal detects whether the hardware devices of the vehicle are in normal operating states, and if so, upon receipt of the parking grant message, controls the vehicle to drive to a predetermined initial parking position in the vicinity of the car washer based on a detected park-in command and to park into the car washing area from the initial parking position.

In the embodiment of the present invention, the vehicle terminal may generate a parking route based on the initial location parking and the car washing area and control the vehicle to park into the car washing area according to the generated parking route.

Steps 901-905 described above may be performed to complete the process of parking the vehicle into the car washer, thereby enabling automatic parking of the vehicle. After the vehicle is parked into the car washing area, steps 906 to 913 may be performed as described below.

906. The vehicle terminal checks whether the hardware devices of the vehicle are in car wash preparation states, and if so, sends a safety check success message to the car washing server via the intelligent car washing cloud server, and if not, outputs a status alert message.

907. The car washer detects whether the vehicle has been parked in the car washing area, and if so, sends a parking success message to car washing server.

908. The car washing server sends at least one car washing service package corresponding to the car washer to the vehicle terminal via the intelligent car washing cloud server upon receipt of the parking success message and the safety check success message.

909. The vehicle terminal detects a target service package selected by the user from the at least one car washing service package and sends a car washing request message to the intelligent car washing cloud server.

910. The intelligent car washing cloud server creates a car washing order for the car washing service corresponding to the target service package based on the car washing request message and charges the deposit account associated with the user account according to the created car washing order, and if the fee deduction is successful, sends the car washing request message to the car washer via the car washing server.

911. The car washer, upon receiving the car washing request message, starts a car washing service corresponding to the target service package for the vehicle.

912. During the car washing process, the car washer synchronizes, via the car washing server and the intelligent car washing cloud server, car washing progress information to the vehicle terminal for display.

913. At the end of the car washing service, the car washer sends a service completion message to the vehicle terminal via the car washing server and the intelligent car washing cloud server and causes the vehicle terminal to output a departure reminder message.

The whole car washing service process for the vehicle can be completed by performance of steps 906 to 913. After the car washing service for the vehicle has been completed, steps 914 to 915 may be performed, as described below.

914. The vehicle terminal detects a park-out command and checks whether the hardware devices of the vehicle are in normal operating states according to the park-out command and, if so, executes step 915.

915. The vehicle terminal controls the vehicle to drive away from the car washing area and reports a vehicle departure message to the car washing server and the intelligent car washing cloud server when the vehicle has exited the car washing area.

The vehicle departure process for the vehicle to exit the car washer can be completed by performance of steps 914 to 915, thereby enabling automatic vehicle departure.

In the embodiment of the present invention, the user does not need to control the vehicle in the whole process of vehicle entry to the car washer, performance of the car washing service and vehicle departure from the car washer. User attention can be relieved and good user interaction experience can be provided.

### Embodiment 5

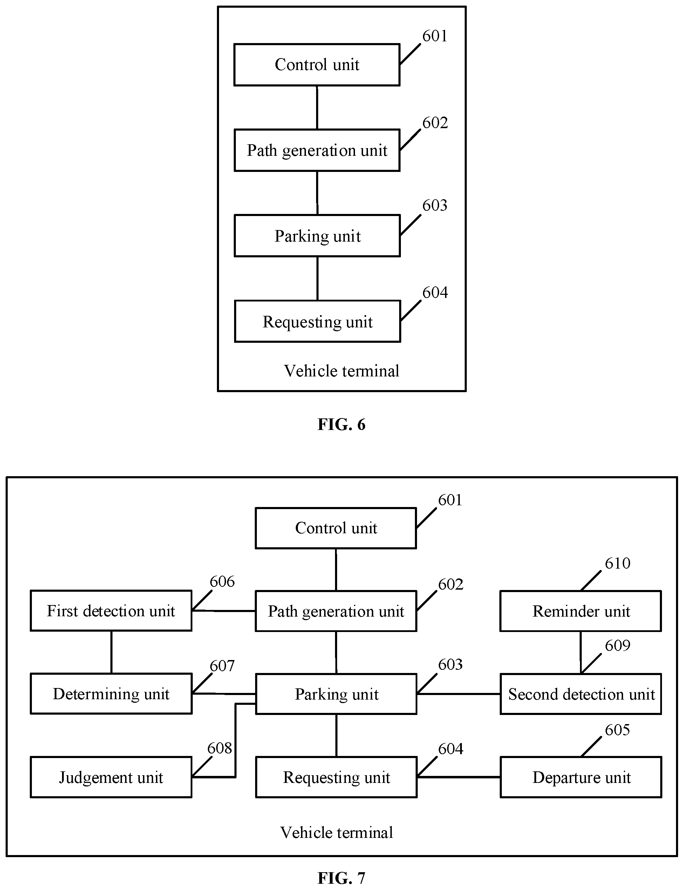

Reference is made to FIG. 6, which is a schematic structural diagram of a vehicle terminal according to an embodiment of the present invention. As shown in FIG. 6, the vehicle terminal may include:
a control unit 601 for controlling a vehicle to drive to a predetermined initial parking position in the vicinity of a car washer upon detection of a park-in command; and
a path generation unit 602 for generating a parking route based on the initial parking position and the location of a car washing area predetermined by the car washer.

In the embodiment of the present invention, the path generation unit 602 may query the server for the location information of the car washing area that it is about to enter and the location information of the initial parking position at which the vehicle is currently or about to be parked. It can then use the initial parking position as a starting point and the location of the car washing area as a destination to generate a parking route. Optionally, the path generation unit 602 may also determine from multiple parking routes stored on the server a corresponding parking route that has a starting point matching the initial parking position at which the vehicle is currently or about to be parked.

The vehicle terminal may further include:
a parking unit 603 for controlling the vehicle to follow the parking route and park in the car washing area; and
a requesting unit 604 for sending a car washing request message to the car washer to cause the car washer to start a car washing service in accordance with the car washing request message when the vehicle is parked within the car washing area.

Using the vehicle terminal shown in FIG. 6 allows a vehicle to be controlled to automatically park into a car washing area of a car washer, without manual manipulation by a driver. This reduces time required for a driver to park the vehicle and improves car wash efficiency. Moreover, once it is detected that a vehicle is parked in the car washing area, car washing service may automatically start, which may further improve car wash efficiency.

### Embodiment 6

Reference is made to FIG. 7, which is a schematic structural diagram of another vehicle terminal according to an embodiment of the present invention. As shown in FIG. 7, the vehicle terminal may include:
a departure unit 605 configured to control the vehicle to drive away from the car washing area upon detection of a park-out command. Optionally, the departure unit 605 may be configured to detect if the car washing service has been completed upon detection of a park-out command, and upon detecting completion of the car washing service, control the vehicle to drive away from the car washing area to further improve safety by reducing safety hazards associated with accidental vehicle start during car wash.

In addition, in the vehicle terminal shown in FIG. 7, the control unit 601 described above may be configured to:
when a navigation destination of the vehicle is set as the location of the car washer, and after detecting that the real-time distance between the vehicle and the car washer is less than a preset threshold distance, confirm detection of a park-in command and control the vehicle to drive to the predetermined initial parking position in the vicinity of the car washer; or
in response to detection of a park-in command input by a user, control the vehicle to drive to the predetermined initial parking position in the vicinity of the car washer.

That is, the control unit 601 may automatically trigger a park-in command to control the vehicle to drive to a predetermined initial parking position when a car washer is set as the navigation destination and when it is detected that the vehicle is near the car washer. Alternatively, the park-in command may be entered by the user, and the control unit controls the vehicle to drive to the initial parking position based on the user entered park-in command.

Optionally, the vehicle terminal shown in FIG. 7 may also include:
a first detection unit 606 configured to detect a preset marker inside the car washer using a camera and a radar sensor of the vehicle; and
a determination unit 607 configured to determine a position of the car washing area based on the position of the marker.

That is, by operation of the detection unit 606 and the determination unit 607, detection of the position of the car washing area may be adjusted in real time based on detection results of the camera and the radar sensor while the vehicle is driven into the car washer, so that the path generation unit 602 may be triggered to further adjust the specific parking route, which in turn allows the parking unit 603 to control the vehicle to park into the car washing area more precisely.

Further optionally, the vehicle terminal shown in FIG. 7 may also include:
a judgement unit 608 for determining whether a fee deduction success message is received, wherein the fee deduction success message is used to indicate that the server has successfully deducted a fee from the deposit account, the deposit account being an account associated with a user account corresponding to the vehicle, and
accordingly, the parking unit 603 described above is configured to control the vehicle to park in the car washing area following the parking route when the judgement unit 608 determines that a fee deduction success message has been received.

Further optionally, the vehicle terminal shown in FIG. 7 may also include:
a second detection unit 609 for detecting whether hardware devices of the vehicle are in normal operating states required for automatic parking, and
accordingly, the parking unit 603 described above is configured to control the vehicle to park in the car washing area following the parking route when the second detection unit 609 detects that the hardware devices are in the normal operating states and the judgement unit 608 determines that a fee deduction success message has been received; and
a reminder unit 610 configured to, when the second detection unit 609 detects that any one of the hardware devices is not in its normal operating state, output a parking reminder message to remind the user to park the vehicle into the car washing area.

That is, the vehicle terminal may control the vehicle to park in the car washing area when it detects that a fee required for the present car washing service has been successfully deducted and that the hardware devices of the vehicle are functioning properly to allow normal automatic parking. When it detects that any of the hardware devices of the vehicle is not functioning properly, which may cause problems during automatic parking, the vehicle terminal reminds the user to manually drive the vehicle into the car washing area.

The vehicle terminal shown in FIG. 7 may control the vehicle to be automatically park into and automatically depart from the car washing area, which allows a user to complete the entire car washing process conveniently. Before controlling the vehicle to automatically park into the car washing area, the hardware devices of the vehicle may be checked and fee for the car washing service may be deducted to improve safety of the automatic parking. Before controlling the vehicle to automatically depart from the car washing area, it may also check whether the car washing service has been completed. This reduces safety hazards caused by sudden vehicle start during car wash and further improves safety.

### Embodiment 7

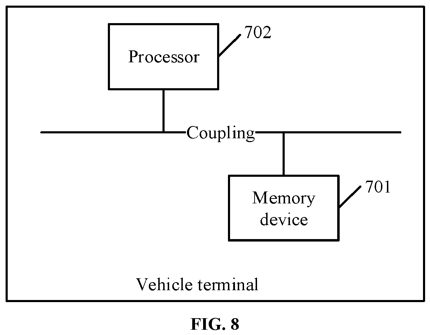

Reference is made to FIG. 8, which is a schematic structural diagram of yet another vehicle terminal according to an embodiment of the present invention. As shown in FIG. 8, the vehicle terminal may include:
a memory device 701 with executable program code stored thereon; and
a processor 702 coupled with the memory device 701;
wherein the processor 702 is configured to execute the executable program code stored in the memory 701, which results in performance of the method of car washing based on automatic parking as illustrated in FIG. 2 or 4.

There is further provided a computer readable storage medium storing a computer program, wherein execution of the computer program causes a computer to perform the method of car washing based on automatic parking as illustrated in FIG. 2 or 4.

There is further provided a computer program product comprising a non-transitory computer readable storage medium storing a computer program, execution of which causes a computer to perform the method of car washing based on automatic parking as illustrated in FIG. 2 or 4.

It should be understood that references throughout the specification to "one embodiment" or "an embodiment" mean that a particular feature, structure, or characteristic described in connection with the embodiment is included in at least one embodiment of the present invention. Thus, the phrases "in one embodiment" or "in an embodiment" used in various passages throughout this specification are not necessarily all referring to the same embodiment. Furthermore, the particular features, structures, or characteristics may be combined in any suitable manner in one or more embodiments. It should also be appreciated by those skilled in the art that the embodiments described in the specification are merely preferred embodiments and that the actions and modules involved are not necessarily required by the present invention.

In various embodiments of the present invention, it should be understood that the order of the sequence numbers of the processes described above is not meant to imply the necessary ordering in which the processes are performed. Rather the ordering of the processes should be determined by their functions and inherent logics. The order of the sequence numbers should not be construed as any limitation on the scope of the embodiments of the present invention.

The units described above as separate components may or may not be physically separate, components illustrated as units may or may not be physical units, and they be present in one place or distributed across multiple network units. Some or all of the units may be selected in accordance with actual needs in order to achieve the purpose of the embodiments of the disclosure.

Furthermore, the various functional units may be integrated in one processing unit, or may physically exist as separate units, or two or more units may be integrated in one unit. The aforementioned integrated units may be implemented in the form of hardware or software functional units.

The aforementioned integrated units may be stored in a computer accessible memory when implemented in the form of a software functional units and sold or used as a standalone product. Based on such understanding, the technical solution of the present invention in essence, or all or part of the technical solution that contributes to the state of the art, may be embodied in the form of a software product. The software product may be stored on a memory device and includes a number of instructions to cause a computer device (which may be a personal computer, server, or network device, or the like, particularly a processor in a computer device) to perform some or all of the steps of the methods of the various embodiments of the invention as described above.

Those of ordinary skills in the art will appreciate that all or some of the steps of the various methods of the embodiments described above may be accomplished by relevant hardware under instructions of a computer program. The computer program may be stored in a computer-readable storage medium such as read-only memory (ROM), random-access memory (RAM), programmable read-only memory (PROM), erasable programmable read-only memory (EPROM), one-time programmable read-only memory (OTPROM), electrically erasable programmable read-only memory (EEPROM), compact-disc read-only memory (CD-ROM) or other optical disk storage device, magnetic disk storage device, magnetic tape storage device, or any other medium that can be used to carry or store data.

The present invention has been described in detail with respect to a method of car washing based on automatic parking and a vehicle terminal. While specific examples have been described herein to illustrate the principles and embodiments of the invention, the description of the examples is provided solely to facilitate understanding of the principles of the invention and its core concept. It will be apparent to those skilled in the art that various changes may be made to the specific embodiments and applications based on the principle of the present invention, and that the present specification should not be construed as limiting the invention.

## Claims

1. A method of car washing based on automatic parking, comprising:
when a navigation destination of a vehicle is set as a location of a car washer, after detecting that a current distance between the vehicle and the car washer is less than a preset threshold distance, automatically triggering a park-in command and controlling (201, 401, 503) the vehicle to drive to a predetermined initial parking position in the vicinity of the car washer in response to detection of the park-in command;
generating (202, 402) a parking route based on the predetermined initial parking position and a location of a car washing area predetermined by the car washer, wherein said generating a parking route comprises selecting, from a plurality of parking routes from each of a plurality of initial parking positions near the car washer to the car washing area, the parking route that has a starting point matching the predetermined initial parking position where the vehicle is currently or about to be parked;
controlling (203, 406, 506) the vehicle to follow the parking route and park in the car washing area automatically; and
sending (204, 408, 510) a car washing request message to the car washer to cause the car washer to start a car washing service in accordance with the car washing request message when the vehicle is parked within the car washing area.

2. The method of claim 1, further comprising:
controlling the vehicle to drive away from the car washing area in response to detection of a park-out command.

3. The method of claim 1, further comprising:
detecting a preset marker inside the car washer using a camera and a radar sensor of the vehicle; and
determining a location of the car washing area based on a location of the marker.

4. The method of any one of claims 1 to 3, further comprising:
determining whether a fee deduction success message has been received; and
if so, performing the step of controlling the vehicle to follow the parking route and park in the car washing area,
wherein the fee deduction success message indicates that a server has successfully deducted a fee from a deposit account, the deposit account being an account associated with a user account corresponding to the vehicle.

5. The method of claim 4, further comprising:
checking whether hardware devices of the vehicle are in normal operating states required for automatic parking;
if so and if the fee deduction success message has been received, performing the step of controlling the vehicle to follow the parking route and park in the car washing area; and
if any one of the hardware devices is not in its normal operating state, outputting a parking reminder message to remind a user to park the vehicle into the car washing area.

6. The method of claim 2, wherein the method further comprises, after detecting the park-out command and before controlling the vehicle to drive away from the car washing area:
determining whether the car washing service of the car washer has been completed, and if so, performing the step of controlling the vehicle to drive away from the car washing area in response to detection of a park-out command.

7. A vehicle terminal of a vehicle, comprising:
a control unit (601) configured, when a navigation destination of the vehicle is set as a location of a car washer, to automatically trigger a park-in command and control the vehicle to drive to a predetermined initial parking position in the vicinity of the car washer in response to detection of a park-in command, after it is detected that a current distance between the vehicle and the car washer is less than a preset threshold distance;
a path generation unit (602) configured to generate a parking route based on the predetermined initial parking position and a location of a car washing area predetermined by the car washer, wherein generating the parking route comprises selecting, from a plurality of parking routes from each of a plurality of initial parking positions near the car washer to the car washing area, the parking route that has a starting point matching the predetermined initial parking position where the vehicle is currently or about to be parked;
a parking unit (603) configured to control the vehicle to follow the parking route and park in the car washing area automatically; and
a requesting unit (604) configured to send a car washing request message to the car washer to cause the car washer to start a car washing service in accordance with the car washing request message when the vehicle is parked within the car washing area.

8. The vehicle terminal of claim 7, further comprising:
a departure unit configured to control the vehicle to drive away from the car washing area in response to detection of a park-out command.

9. The vehicle terminal of claim 7, further comprising:
a first detection unit configured to detect a preset marker inside the car washer using a camera and a radar sensor of the vehicle; and
a determination unit configured to determine a location of the car washing area based on a location of the marker.

10. The vehicle terminal of any one of claims 7 to 9, further comprising:
a judgement unit configured to determine whether a fee deduction success message is received,
wherein the parking unit is configured to control the vehicle to follow the parking route and park in the car washing area when the judgement unit determines that a fee deduction success message has been received, and
wherein the fee deduction success message indicates that a server has successfully deducted a fee from a deposit account, the deposit account being an account associated with a user account corresponding to the vehicle.

11. The vehicle terminal of claim 10, further comprising:
a second detection unit configured to check whether hardware devices of the vehicle are in normal operating states required for automatic parking;
the parking unit is configured to control the vehicle to follow the parking route and park in the car washing area when the second detection unit detects that the hardware devices of the vehicle are in the normal operating states and the judgement unit determines that the fee deduction success message has been received; and
a reminder unit configured to, when the second detection unit detects that any one of the hardware devices is not in its normal operating state, output a parking reminder message to remind the user to park the vehicle into the car washing area.

12. The vehicle terminal of claim 8, wherein the departure unit is configured to:
after a park-out command is detected, determine whether the car washing service of the car washer has been completed; and
when it is determined that the car washing service has been completed, control the vehicle to drive away from the car washing area.

## Patentansprüche

1. Verfahren zum Waschen von Autos auf der Basis von automatischem Einparken, das Folgendes beinhaltet:
automatisches Auslösen, wenn ein Navigationsziel eines Fahrzeugs als Standort einer Autowaschanlage eingestellt ist, nach dem Erkennen, dass eine aktuelle Entfernung zwischen dem Fahrzeug und der Autowaschanlage geringer ist als eine voreingestellte Schwellenentfernung, eines Einparkbefehls und Steuern (201, 401, 503) des Fahrzeugs zum Fahren in eine vorbestimmte anfängliche Parkposition in der Nähe der Autowaschanlage als Reaktion auf die Erkennung des Einparkbefehls;
Erzeugen (202, 402) einer Parkroute auf der Basis der vorbestimmten anfänglichen Einparkposition und eines durch die Autowaschanlage vorbestimmten Ortes eines Autowaschbereichs, wobei das genannte Erzeugen einer Parkroute das Auswählen derjenigen Parkroute aus mehreren Parkrouten von jeder von mehreren anfänglichen Einparkpositionen in der Nähe der Autowaschanlage zu dem Autowaschbereich umfasst, deren Startpunkt mit der vorbestimmten anfänglichen Einparkposition übereinstimmt, an der das Fahrzeug gerade geparkt ist oder geparkt werden soll;
Steuern (203, 406, 506) des Fahrzeugs zum Folgen der Parkroute und zum automatischen Einparken in dem Autowaschbereich; und
Senden (204, 408, 510) einer Autowaschanforderungsnachricht zur Autowaschanlage, um zu bewirken, dass die Autowaschanlage einen Autowaschdienst gemäß der Autowaschanforderungsnachricht beginnt, wenn das Fahrzeug innerhalb des Autowaschbereichs eingeparkt ist.

2. Verfahren nach Anspruch 1, das ferner Folgendes beinhaltet:
Steuern des Fahrzeugs zum Wegfahren aus dem Autowaschbereich als Reaktion auf die Erkennung eines Ausparkbefehls.

3. Verfahren nach Anspruch 1, das ferner Folgendes beinhaltet:
Erkennen einer voreingestellten Markierung innerhalb der Autowaschanlage mittels einer Kamera und eines Radarsensors des Fahrzeugs; und
Bestimmen eines Standorts des Autowaschbereichs auf der Basis eines Orts der Markierung.

4. Verfahren nach einem der Ansprüche 1 bis 3, das ferner Folgendes beinhaltet:
Feststellen, ob eine Gebühreneinzugserfolgsmeldung empfangen wurde; und
wenn ja, Durchführen des Schritts des Steuerns des Fahrzeugs zum Folgen der Parkroute und zum Einparken in dem Autowaschbereich,
wobei die Gebühreneinzugserfolgsmeldung anzeigt, dass ein Server erfolgreich eine Gebühr von einem Einlagenkonto eingezogen hat, wobei das Einlagenkonto ein mit einem dem Fahrzeug entsprechenden Benutzerkonto assoziiertes Konto ist.

5. Verfahren nach Anspruch 4, das ferner Folgendes beinhaltet:
Prüfen, ob Hardware-Geräte des Fahrzeugs in normalen Betriebszuständen sind, die für automatisches Einparken erforderlich sind;
wenn ja und wenn die Gebühreneinzugserfolgsmeldung empfangen wurde, Durchführen des Schritts des Steuerns des Fahrzeugs zum Folgen der Parkroute und Einparken in dem Autowaschbereich; und
wenn eines der Hardware-Geräte nicht in seinem normalen Betriebszustand ist, Ausgeben einer Parkerinnerungsmeldung, um einen Benutzer daran zu erinnern, das Fahrzeug im Autowaschbereich zu parken.

6. Verfahren nach Anspruch 2, wobei das Verfahren ferner, nach dem Erkennen des Ausparkbefehls und vor dem Steuern des Fahrzeugs zum Wegfahren aus dem Autowaschbereich, Folgendes beinhaltet:
Feststellen, ob der Autowaschdienst der Autowaschanlage beendet ist, und wenn ja, Durchführen des Schritts des Steuerns des Fahrzeugs zum Wegfahren aus dem Autowaschbereich als Reaktion auf die Erkennung eines Ausparkbefehls.

7. Fahrzeugterminal eines Fahrzeugs, das Folgendes umfasst:
eine Steuereinheit (601), konfiguriert zum automatischen Auslösen, wenn ein Navigationsziel des Fahrzeugs als ein Ort einer Autowaschanlage eingestellt ist, eines Einparkbefehls und zum Steuern des Fahrzeugs zum Fahren, als Reaktion auf die Erkennung eines Einparkbefehls, zu einer vorbestimmten anfänglichen Parkposition in der Nähe der Autowaschanlage, nachdem erkannt wurde, dass eine aktuelle Entfernung zwischen dem Fahrzeug und der Autowaschanlage geringer ist als eine voreingestellte Schwellenentfernung;
eine Wegerzeugungseinheit (602), konfiguriert zum Erzeugen einer Parkroute auf der Basis der vorbestimmten anfänglichen Parkposition und eines durch die Autowaschanlage vorbestimmten Ortes eines Autowaschbereichs, wobei das Erzeugen der Parkroute das Auswählen derjenigen Parkroute aus mehreren Parkrouten von jeder von mehreren anfänglichen Parkpositionen in der Nähe der Autowaschanlage zum Autowaschbereich umfasst, deren Startpunkt mit der vorbestimmten anfänglichen Parkposition übereinstimmt, an der das Fahrzeug gerade geparkt ist oder geparkt werden soll;
eine Parkeinheit (603), konfiguriert zum Steuern des Fahrzeugs zum Folgen der Parkroute und zum automatischen Einparken im Autowaschbereich; und
eine Anforderungseinheit (604), konfiguriert zum Senden einer Autowaschanforderungsmeldung zur Autowaschanlage, um zu bewirken, dass die Autowaschanlage einen Autowaschdienst gemäß der Autowaschanforderungsmeldung beginnt, wenn das Fahrzeug innerhalb des Autowaschbereichs geparkt ist.

8. Fahrzeugterminal nach Anspruch 7, das ferner Folgendes umfasst:
eine Wegfahreinheit, konfiguriert zum Steuern des Fahrzeugs zum Wegfahren aus dem Autowaschbereich als Reaktion auf die Erkennung eines Ausparkbefehls.

9. Fahrzeugterminal nach Anspruch 7, das ferner Folgendes umfasst:
eine erste Erkennungseinheit, konfiguriert zum Erkennen einer voreingestellten Markierung innerhalb der Autowaschanlage mittels einer Kamera und eines Radarsensors des Fahrzeugs; und
eine Bestimmungseinheit, konfiguriert zum Bestimmen einer Position des Autowaschbereichs auf der Basis eines Orts der Markierung.

10. Fahrzeugterminal nach einem der Ansprüche 7 bis 9, das ferner Folgendes umfasst:
eine Beurteilungseinheit, konfiguriert zum Feststellen, ob eine Gebühreneinzugserfolgsnachricht empfangen wurde,
wobei die Parkeinheit konfiguriert ist zum Steuern des Fahrzeugs zum Folgen der Parkroute und zum Einparken im Autowaschbereich, wenn die Beurteilungseinheit feststellt, dass eine Gebühreneinzugserfolgsmeldung empfangen wurde, und
wobei die Gebühreneinzugserfolgsmeldung anzeigt, dass ein Server erfolgreich eine Gebühr von einem Einlagenkonto eingezogen hat, wobei das Einlagenkonto ein mit einem dem Fahrzeug entsprechenden Benutzerkonto assoziiertes Konto ist.

11. Fahrzeugterminal nach Anspruch 10, das ferner Folgendes umfasst:
eine zweite Erkennungseinheit, konfiguriert zum Prüfen, ob Hardware-Geräte des Fahrzeugs in normalen Betriebszuständen sind, die für automatisches Einparken erforderlich sind;
die Parkeinheit zum Steuern des Fahrzeugs zum Folgen der Parkroute und zum Einparken im Autowaschbereich konfiguriert ist, wenn die zweite Erkennungseinheit erkennt, dass die Hardware-Geräte des Fahrzeugs in den normalen Betriebszuständen sind, und die Beurteilungseinheit feststellt, dass die Gebühreneinzugserfolgsmeldung empfangen wurde; und
eine Erinnerungseinheit, konfiguriert zum Ausgeben, wenn die zweite Erkennungseinheit erkennt, dass eines der Hardware-Geräte nicht in seinem normalen Betriebszustand ist, einer Parkerinnerungsmeldung, um den Benutzer daran zu erinnern, das Fahrzeug im Autowaschbereich zu parken.

12. Fahrzeugterminal nach Anspruch 8, wobei die Wegfahreinheit konfiguriert ist zum:
Feststellen, nach dem Erkennen eines Ausparkbefehls, ob der Autowaschdienst der Autowaschanlage beendet ist; und
Steuern, wenn festgestellt wird, dass der Autowaschdienst beendet ist, des Fahrzeugs zum Wegfahren aus dem Autowaschbereich.

## Revendications

1. Procédé de lavage auto basé sur un stationnement automatique, comprenant :
lorsqu'une destination de navigation d'un véhicule est définie à un emplacement d'une station de lavage auto, après une détection du fait qu'une distance actuelle entre le véhicule et la station de lavage auto est inférieure à une distance seuil prédéfinie, un déclenchement automatique d'une commande de mise en stationnement et une commande (201, 401, 503) du véhicule pour conduire vers une position de stationnement initiale prédéterminée à proximité de la station de lavage auto en réponse à une détection de la commande de mise en stationnement ;
une génération (202, 402) d'un itinéraire de stationnement sur la base de la position de stationnement initiale prédéterminée et un emplacement d'une zone de lavage auto prédéterminée par la station de lavage auto, dans lequel ladite génération d'un itinéraire de stationnement comprend une sélection, à partir d'une pluralité d'itinéraires de stationnement à partir de chacune d'une pluralité de positions de stationnement initiales près de la station de lavage auto vers la zone de lavage auto, de l'itinéraire de stationnement qui présente un point de départ correspondant à la position de stationnement initiale prédéterminée où le véhicule est actuellement ou sur le point d'être stationné ;
une commande (203, 406, 506) du véhicule pour suivre l'itinéraire de stationnement et stationner dans la zone de lavage auto automatiquement ; et
un envoi (204, 408, 510) d'un message de demande de lavage auto à la station de lavage auto pour amener la station de lavage auto à démarrer un service de lavage auto selon le message de demande de lavage auto lorsque le véhicule est stationné à l'intérieur de la zone de lavage auto.

2. Procédé selon la revendication 1, comprenant en outre :
une commande du véhicule pour repartir de la zone de lavage auto en réponse à une détection d'une commande de sortie de stationnement.

3. Procédé selon la revendication 1, comprenant en outre :
une détection d'un marqueur prédéfini à l'intérieur de la station de lavage auto en utilisant une caméra et un capteur radar du véhicule ; et
une détermination d'un emplacement de la zone de lavage auto sur la base d'un emplacement du marqueur.

4. Procédé selon l'une quelconque des revendications 1 à 3, comprenant en outre :
une détermination de si un message de réussite de déduction de frais a été reçu ; et
si tel est le cas, une réalisation de l'étape de commande du véhicule pour suivre l'itinéraire de stationnement et stationner dans la zone de lavage auto,
dans lequel le message de réussite de déduction de frais indique qu'un serveur a déduit avec succès des frais d'un compte de dépôt, le compte de dépôt étant un compte associé à un compte d'utilisateur correspondant au véhicule.

5. Procédé selon la revendication 4, comprenant en outre :
une vérification de si des dispositifs matériels du véhicule sont dans des états normaux de fonctionnement requis pour un stationnement automatique ;
si tel est le cas et si le message de réussite de déduction de frais a été reçu, une réalisation de l'étape de commande du véhicule pour suivre l'itinéraire de stationnement et stationner dans la zone de lavage auto ; et
si un quelconque des dispositifs matériels n'est pas dans son état normal de fonctionnement, une émission d'un message de rappel de stationnement pour rappeler à un utilisateur de stationner le véhicule dans la zone de lavage auto.

6. Procédé selon la revendication 2, dans lequel le procédé comprend en outre, après la détection de la commande de sortie de stationnement et avant la commande du véhicule pour repartir de la zone de lavage auto :
une détermination de si le service de lavage auto de la station de lavage auto est terminé, et si tel est le cas, une réalisation de l'étape de commande du véhicule pour repartir de la zone de lavage auto en réponse à une détection d'une commande de sortie de stationnement.

7. Terminal de véhicule d'un véhicule, comprenant :
une unité de commande (601) configurée, lorsqu'une destination de navigation du véhicule est définie à un emplacement d'une station de lavage auto, pour déclencher automatiquement une commande de mise en stationnement et commander le véhicule pour conduire jusqu'à une position de stationnement initiale prédéterminée à proximité de la station de lavage auto en réponse à une détection d'une commande de mise en stationnement, après une détection du fait qu'une distance actuelle entre le véhicule et la station de lavage auto est inférieure à une distance seuil prédéfinie ;
une unité de génération de trajet (602) configurée pour générer un itinéraire de stationnement sur la base de la position de stationnement initiale prédéterminée et un emplacement d'une zone de lavage auto prédéterminée par la station de lavage auto, dans lequel la génération de l'itinéraire de stationnement comprend une sélection, à partir d'une pluralité d'itinéraires de stationnement à partir de chacune d'une pluralité de positions de stationnement initiales près de la station de lavage auto vers la zone de lavage auto, de l'itinéraire de stationnement qui présente un point de départ correspondant à la position de stationnement initiale prédéterminée où le véhicule est actuellement ou sur le point d'être stationné ;
une unité de stationnement (603) configurée pour commander le véhicule pour suivre l'itinéraire de stationnement et stationner dans la zone de lavage auto automatiquement ; et
une unité de demande (604) configurée pour envoyer un message de demande de lavage auto à la station de lavage auto pour amener la station de lavage auto à démarrer un service de lavage auto selon le message de demande de lavage auto lorsque le véhicule est stationné à l'intérieur de la zone de lavage auto.

8. Terminal de véhicule selon la revendication 7, comprenant en outre :
une unité de départ configurée pour commander le véhicule pour repartir de la zone de lavage auto en réponse à une détection d'une commande de sortie de stationnement.

9. Terminal de véhicule selon la revendication 7, comprenant en outre :
une première unité de détection configurée pour détecter un marqueur prédéfini à l'intérieur de la station de lavage auto en utilisant une caméra et un capteur radar du véhicule ; et
une unité de détermination configurée pour déterminer un emplacement de la zone de lavage auto sur la base d'un emplacement du marqueur.

10. Terminal de véhicule selon l'une quelconque des revendications 7 à 9, comprenant en outre :
une unité de décision configurée pour déterminer si un message de réussite de déduction de frais est reçu ou non,
dans lequel l'unité de stationnement est configurée pour commander le véhicule pour suivre l'itinéraire de stationnement et stationner dans la zone de lavage auto lorsque l'unité de décision détermine qu'un message de réussite de déduction de frais a été reçu, et
dans lequel le message de réussite de déduction de frais indique qu'un serveur a déduit avec succès des frais d'un compte de dépôt, le compte de dépôt étant un compte associé à un compte d'utilisateur correspondant au véhicule.

11. Terminal de véhicule selon la revendication 10, comprenant en outre :
une seconde unité de détection configurée pour vérifier si des dispositifs matériels du véhicule sont dans des états normaux de fonctionnement requis pour un stationnement automatique ou non ;
l'unité de stationnement est configurée pour commander le véhicule pour suivre l'itinéraire de stationnement et stationner dans la zone de lavage auto lorsque la seconde unité de détection détecte que les dispositifs matériels du véhicule sont dans les états normaux de fonctionnement et l'unité de décision détermine que le message de réussite de déduction de frais a été reçu ; et
une unité de rappel configurée pour, lorsque la seconde unité de détection détecte qu'un quelconque des dispositifs matériels n'est pas dans son état normal de fonctionnement, émettre un message de rappel de stationnement pour rappeler à l'utilisateur de stationner le véhicule dans la zone de lavage auto.

12. Terminal de véhicule selon la revendication 8, dans lequel l'unité de départ est configurée pour :
après la détection d'une commande de sortie de stationnement, déterminer si le service de lavage auto de la station de lavage auto est terminé ou non ; et
lorsqu'il est déterminé que le service de lavage auto est terminé, commander le véhicule pour repartir de la zone de lavage auto.
